# EUROPÄISCHE PATENTSCHRIFT

(11) **EP 3 380 657 B1**
(45) Veröffentlichungstag und Bekanntmachung des Hinweises auf die Patenterteilung: **01.07.2020**
(21) Anmeldenummer: 16802032.9
(22) Anmeldetag: 25.11.2016
(51) Int. Cl.: D01F 9/17, D01F 9/00, C08L 97/00

(54) **VERFAHREN ZUR HERSTELLUNG EINER LIGNIN-BASIERTEN ZUSAMMENSETZUNG**
METHOD FOR PRODUCING A LIGNIN-BASED COMPOSITION
PROCÉDÉ DE FABRICATION D'UNE COMPOSITION À BASE DE LIGNINE

(30) Priorität: 25.11.2015 DE 102015120377
(43) Veröffentlichungstag der Anmeldung: 03.10.2018
(73) Patentinhaber: Deutsche Institute für Textil- und Faserforschung Denkendorf, 73770 Denkendorf (DE)
(72) Erfinder: CLAUSS, Manuel, 73760 Ostfildern (DE); FRANK, Erik, 89160 Dornstadt (DE); BUCHMEISER, Michael R., 73630 Remshalden (DE)
(74) Vertreter: Letzelter, Felix Phillip
(86) Internationale Anmeldenummer: PCT/EP2016/078896
(87) Internationale Veröffentlichungsnummer: WO 2017/089585

(56) Entgegenhaltungen:
- CN-A- 105 040 162
- DE-A1-102014 004 797
- QING SHEN ET AL: "Lignin-Based Activated Carbon Fibers and Controllable Pore Size and Properties", JOURNAL OF APPLIED POLYMER SCIENCE, JOHN WILEY & SONS, INC, US, Bd. 121, Nr. 2, 15. Juli 2011 (2011-07-15) , Seiten 989-994, XP007918131, ISSN: 0021-8995, DOI: 10.1002/APP.33701 [gefunden am 2011-02-25]

## Beschreibung

Die Erfindung betrifft ein Verfahren zur Herstellung einer schmelzspinnbaren Lignin-basierten Zusammensetzung, eine Weiterbildung dieses Verfahrens, wonach dessen Verfahrenserzeugnisse zur Herstellung von Precursorfasern für Carbonfasern genutzt werden, sowie die Verwendung dieser Precursorfasern zur Herstellung von Carbonfasern durch Carbonisierung, gegebenenfalls mit anschließender Graphitisierung.

Unter Carbonfasern versteht man jedes Kohlenstoff enthaltende und bevorzugt aus Kohlenstoff bestehende, im Verhältnis zu seiner Länge dünne und flexible Gebilde, welches mindestens ein Monofilament enthält und einen Kohlenstoffgehalt von mindestens 92 Gew.-% besitzt, hergestellt aus einem polymeren organischen Precursor oder Kohlenstoff-allotropen Bausteinen. Daher zählen definitionsgemäß zu den Carbonfasern sowohl alle diesen Kriterien entsprechenden Carbonfaser-Einzelfilamente als auch alle Carbonfaserbündel bzw. Carbonfaser-Rovings.

Carbonfasern werden gegenwärtig aus organischen Ausgangsmaterialien, den sogenannten Precursoren hergestellt, die einen hohen Gehalt an Kohlenstoff haben. Die am häufigsten verwendeten Precursoren sind Polyacrylnitril (PAN) und Mesophasen-Pech (Pitch). Beide sind erdölbasiert, die Synthese von potenten PAN Fasern ist aufwändig und kostenintensiv. Zudem sind beide Precursoren direkt vom gegebenenfalls stark schwankenden Rohölpreis abhängig. Daher ist es von besonderem Interesse, alternative Precursoren für die Carbonfasersynthese zu entwickeln. Um wirtschaftlich rentabel zu sein, müssen diese entweder bessere Carbonfaser-Qualitäten liefern oder zumindest günstiger als die gängigen Precursor-Systeme sein. Ein diskutiertes alternatives Ausgangsmaterial für Carbonfasern ist das Biopolymer Lignin, das zusammen neben Cellulose das am zweithäufigsten vorkommende Biopolymer ist. Es zeichnet sich durch die gute Verfügbarkeit und den geringen Grundpreis sowie einen hohen Gehalt an Kohlenstoff > 60 Gew.-% aus.

Das japanische Unternehmen Nippon Kayaku betrieb in den sechziger Jahren des vergangenen Jahrhunderts intensiv Forschung auf dem Gebiet der Lignin-basierten Carbonfasern und veröffentlichte einige der Erfindungen (US 3461082 A). Als Resultat der Forschungen wurde die erste Lignin-basierte Kohlenstofffaser auf den Markt gebracht. Diese Faser wurde jedoch nur von 1967 bis 1973 produziert und vertrieben. Seit der Jahrtausendwende häufen sich Publikationen mit Patenten und Forschungsarbeiten zu Lignin-basierten Carbonfasern. Jedoch gibt es bis heute keine kommerziell erhältliche Lignin-basierte Carbonfaser, die auch den oben genannten Anforderungen annähernd entspricht. Bis heute existieren einige Methoden, die Lignin in die Faserform und in Carbonfasern überführen sollen. Grundsätzlich lassen sich die Methoden zum Erzeugen der Fasern in Nass-, Trocken- und Schmelzspinnprozesse unterscheiden. Schmelzspinnprozesse stellen sich aufgrund des Fehlens von Lösungsmitteln und des relativ einfachen technischen Aufwands als am praktikabelsten dar. Nicht jeder Typ des Lignins ist *per se* schmelzbar. Hierzu sind einige Methoden veröffentlicht worden, die im Wesentlichen die Verarbeitung des Lignins ermöglichen und verbessern sollen. Die eine Gruppe der Methoden beinhaltet das Mischen des Lignins mit geeigneten weichmachenden Substanzen, gleichermaßen monomere wie auch polymere Substanzen. Zu diesen Substanzen zählen beigemischte nieder-schmelzbare Hardwood-Lignine oder von denselbigen abgetrennte niedrig-schmelzende Fraktionen (Innventia, Y. Nordström in WO 2012112108 A1).

Die zweite Gruppe der Methoden befasst sich primär mit Derivatisierungsreaktionen der Lignine. Meist handelt es sich dabei um Ester oder auch Ether der Hydroxylgruppen der Lignine sowie um weitere Derivate, wie Urethane. Als strukturell einfachster Ester des Lignins gilt das acetylierte Lignin, hergestellt entweder über einen Essigsäure-Aufschluss des Lignins mit automatischer Teilveresterung oder die gezielte quantitative Veresterung (US 7794824 B2). Beschrieben werden im Stand der Technik weitere Ester-, Ether- und Urethanderivate (B. Wohlmann in WO 2010081775 A1). Es ist auch ein Ligninderivat bekannt, das sich von den bisherigen Derivaten darin unterscheidet, dass hier nicht die Hydroxylfunktion des Lignins derivatisiert wird, sondern der *alpha*-Kohlenstoff phenolischer Hydroxylgruppen. Hierbei wurden verschiedene Amine über Methylenbrücken via Formaldehyd an Hardwood-Lignine gekoppelt (B. Wohlmann, S. Stüsgen in WO 2013144123 A1). Der Nachteil dieses technischen Vorschlags liegt darin, dass das beschriebene schmelzbare Ligninderivat über mit Formaldehyd angekoppelte komplizierte Amine derivatisiert ist. Der Einbezug von Aminen ist ein erheblicher Nachteil. Diese führen spätestens bei der Carbonisierung der Precursorfasern zur nachteiligen Entwicklung schädlicher Gase, wie zum Beispiel Blausäure und andere niedermolekulare Stickstoffverbindungen. Zudem wird dieses Produkt nasschemisch erzeugt, was eine beschwerliche Verfahrensführung darstellt.

Beschrieben sind schließlich im Stand der Technik verschiedene modifizierte Softwood-Lignine, insbesondere Methoxybenzoyl-Lignin und Zimtsäure-Lignin (sh. L. Steudle, E. Frank, M. R. Buchmeiser in DE 102014004797 A1). Als Additive fungieren die den Untereinheiten des Lignins sehr ähnlichen Verbindungen, wie Vanilin, wie auch potentiell vernetzende Verbindungen, wie monomere und polymere Acrylate.

In Hinblick auf die nachfolgend dargestellte Erfindung soll ein kurzer Überblick über den Bereich der Lignin-basierten Novolake gegeben werden. Aufgrund dessen, dass Lignin im Prinzip hauptsächlich aus Phenolderivaten, nämlich Cumarylalkohol, Coniferylalkohol und Sinapylalkohol aufgebaut ist, kann, ähnlich wie bei reinem Phenol, Lignin mit Formaldehyd in einer Kondensationsreaktion zu einem Harz reagieren. Im Falle von üblichen Phenolharzen kann man diese in zwei Gruppen einteilen: Novolake und Resole. Novolake entstehen durch Säurekatalyse der genannten Reaktion des Phenols mit Formaldehyd. In der Regel wird Formaldehyd im Unterschuss zugegeben. Die Stöchiometrie führt dazu, dass die Novolake meist relativ temperaturstabil und schmelzbar sind. Resole dagegen werden unter Basenkatalyse und Formaldehydüberschuss hergestellt. Die Produkte sind leicht aushärtbar, daher schlecht löslich und nicht mehr schmelzbar. Klassisehe Phenol-Novolake werden in der Regel in einem Batch-Verfahren hergestellt. Hierzu wird Phenol (Smp. 40,5°C) aufgeschmolzen und eine wässrige Lösung von Formaldehyd oder ein Formaldehyd-Precursor, sowie eine Säure, zum Beispiel Oxalsäure, zugegeben. Die Reaktionsmischung wird für einige Zeit wärmebehandelt, ehe das Material die gewünschten Eigenschaften angenommen hat. Das Phenol kann hierbei durch Lignin ersetzt werden. Jedoch übersteigt der Anteil an Lignin selten den Anteil an Phenol. Durch den Zusatz von Lignin ändern sich die Reaktionsbedingungen und die Reaktivität ist herabgesetzt. Daher müssen längere Reaktionszeiten und eventuell höhere Temperaturen angewandt werden. Verwendung finden diese Novolake als Bindemittel und Adhäsive. Sie können durch Zusatz von weiterem Formaldehyd oder auch Aminen gehärtet werden.

Beschrieben wird im Stand der Technik auch ein Verfahren zur Herstellung eines Lignin-Phenol-Novolaks durch Säurekatalyse. Als katalytische Säuren werden Salzsäure und Schwefelsäure in niedrigen Konzentrationen sowie auch Oxalsäure erwähnt. Als Formaldehydquelle kommen eine wässrige Lösung von Formaldehyd (Formalin) wie auch Paraformaldehyd und 1,3,5-Trioxan in Frage (A. Apel in US 2956033).

Bekannt ist auch ein Verfahren zur Erzeugung sogenannter Ligno-Novolake, wobei Novolak-artige Kondensationsprodukte aus Lignin, einer phenolartigen Verbindung (Phenol, Kresol, Kresolsäure, Xylenol) und einem Aldehyd (Formaldehyd, Furfural, Paraformaldehyd) gemeint sind (Gobran in US 4320036 A). Schließlich ist ein phenolisches Harz bekannt, das auf einer Polykondensation von Lignin, Phenol und Formaldehyd unter basischer und saurer Katalyse basiert (Delmas in WO 2014206586 A1).

Weiteres zum Stand der Technik: Die DE 10 2014 004 797 A1 offenbart ein Verfahren zur Herstellung einer schmelzspinnbaren Lignin-basierten Zusammensetzung, wobei eine Reaktionsmischung, die ein Ligninderivat als Reaktivkomponente A und ein Hilfspolymer mit Vernetzerfunktion und/oder mit Weichmacherfunktion als Reaktivkomponente B enthält, bei erhöhter Temperatur einer Reaktivextrusion unterworfen wird. Die Reaktivkomponente B wird aus der Gruppe ungesättigter Polyester, gesättigter Polyester, Polyformaldehyd, Polyacetaldehyd, Polybenzaldehyd, Polyketon, Polyvinylacetat und/oder Polymethoxystyrol ausgewählt. Da die Zusammensetzung der DE 10 2014 004 797 A1 geschmolzen wird, lässt sich annehmen, dass sie eine komplexe Viskosität im Extruder von weniger als 1500 Pa.s aufweist. Polyformaldehyd wird in der DE 10 2014 004 797 A1 lediglich in einer Liste genannt. In dieser Druckschrift findet sich kein Hinweis darauf, dass diese Verbindung tatsächlich verwendet wird. Über die genauen Wirkungen hierzu liegen keine Angaben vor. Es scheint, dass Polyformaldehyd nach der DE 10 2014 004 797 A1 nicht als Vernetzer, sondern als Weichmacher verwendet wird. So wird im Anspruch 1 dieser Druckschrift darauf hingewiesen, dass eine Verbindung B mit Vernetzerfunktion ungesättigte Einheiten enthalten soll. Polyformaldehyd enthält keine ungesättigten Einheiten. Es ist noch anzumerken, dass Polyformaldehyd nicht mit Paraformaldehyd identisch ist, da Paraformaldehyd einen Polymerisationsgrad von 8 bis 100 aufweist.

Ausgehend von dem vorstehend geschilderten Stand der Technik, liegt der Erfindung die Aufgabe zugrunde, ein Verfahren zur Herstellung einer schmelzbaren Lignin-basierten Zusammensetzung vorzuschlagen, das sich dadurch auszeichnet, dass es einfach, praktikabel und wirtschaftlich durchzuführen ist. Zudem soll das Verfahrenserzeugnis in Form der Lignin-basierten Zusammensetzung vorteilhaft in Precursorfasern von Carbonfasern überführt werden können. Die daraus nach der Carbonisierung und gegebenenfalls Graphitisierung erhaltenen Carbonfasern sollen sich durch vorteilhafte mechanische Eigenschaften auszeichnen, die diejenigen bisher bekannter Lignin-basierter Carbonfasern übertreffen, so vorteilhafte Werte der Zugfestigkeit und des E-Moduls.

Diese Aufgabe wird durch ein Verfahren zur Herstellung einer schmelzbaren Lignin-basierten Zusammensetzung gelöst, das dadurch gekennzeichnet ist, dass eine Reaktionsmischung, die Lignin und/oder ein Ligninderivat in Form eines veresterten oder veretherten Lignins als Reaktivkomponente A und eine bei Raumtemperatur (20°C) feste Formaldehyd freisetzende Verbindung als Reaktivkomponente B in Form von 1,3,5-Trioxan, Paraformaldehyd und/oder Hexamethylentetramin enthält, bei erhöhter Temperatur, vorzugsweise bei einer Temperatur von 100 bis 230°C, insbesondere von 100 bis 200°C, einer Reaktivextrusion unterworfen wird, wobei die Reaktionsmischung auf eine komplexe Viskosität unter 1500 Pa.s, vorzugsweise unter 1300 Pa.s, insbesondere von 10 bis 1000 Pa.s, eingestellt wird. Der besonders bevorzugte Temperaturbereich bei der Durchführung der Reaktivextrusion beträgt 120 bis 180°C.

Eine wesentliche Komponente der dem erfindungsgemäßen Verfahren zugrundeliegenden Reaktionsmischung ist demzufolge die Reaktionskomponente A, die zunächst Lignin und/oder ein Ligninderivat darstellen kann, sowie eine Formaldehyd freigebende Verbindung als Reaktivkomponente B. Diese Mischung wird im Rahmen der Erfindung einer üblichen Reaktivextrusion unterworfen. Die Reaktionskomponente A macht an der gesamten Reaktionsmischung vorzugsweise einen Masseanteil von mindestens 50 Gew.-%, insbesondere von mindestens 60 Gew.-%, aus. Ganz besonders bevorzugt wird der Bereich von 50 bis 70 Gew.-%.

Das Lignin als Reaktivkomponente A kann von einer einzigen Sorte stammen wie auch aus mehreren verschiedenen Ligninen in unterschiedlichen Anteilen zusammengesetzt sein. Es kann sich auch um eine künstliche Komposition verschiedener Fraktionen von Ligninen handeln. Die Lignine können dabei zuvor chemisch modifiziert werden, was dann zu dem Ligninderivat als Reaktivkomponente A führt.

Die Reaktivkomponente B stellt eine Verbindung oder ein Gemisch aus Verbindungen dar, deren Hauptaufgabe es ist, kontrolliert Formaldehyd freizusetzen, welches zur weiteren Reaktion mit den bezeichneten Komponenten der Mischung fähig ist. Ferner wird, worauf nachfolgend noch eingegangen wird, vorzugsweise mindestens eine dritte Komponente C einbezogen, die ihren Hauptnutzen darin hat, die Reaktivität des Lignins mit Formaldehyd zu beschleunigen, als verknüpfender Baustein zu wirken wie auch als Weichmacher. Weitere Komponenten sind zusätzliche weichmachende Substanzen, die die Verarbeitung und Handhabung der Schmelze und der Faser verbessern, Komponenten, die die Reaktion der Komponenten mit Formaldehyd beschleunigen, sowie Polymere, die die mechanischen Eigenschaften der Lignin-Fasern und die Eigenschaften der Schmelze verbessern.

Nachfolgend sollen die wesentlichen Komponenten, der Reaktionsmischung des erfindungsgemäßen Verfahrens detailliert erläutert werden:
Als Lignin lässt sich grundsätzlich jedes isolierte Lignin einsetzen. Dies umfasst Lignine aus nahezu allen Herstellungsmethoden, das heißt Lignine aus Sulfit-Aufschluss, Sulfat (Kraft)-Aufschluss, Soda-Anthrachinon-Aufschluss und Organosolv-Aufschlüssen jeglicher Art. Nach der Definition des Lignins hinsichtlich des Holzes umfasst die Definition daher auch Hartholz (Hardwood)-Lignine gleichermaßen wie Weichholz (Softwood)-Lignine und Lignine aus Einjahrespflanzen. Je nach Herstellungsmethode und Typ des Lignins kann es nötig sein, zum einen die Zusammensetzung der bereits beschriebenen Komponenten der Reaktion zu variieren und so eine optimale Verarbeitbarkeit zu gewährleisten. Auch ist es möglich, ein optimales Lignin durch Fraktionieren eines oder mehrerer Lignine nach z.B. Molekulargewichten in verschiedene Fraktionen und durch Mischen dieser Fraktionen zusammenzustellen. Möglich sind die fraktionierte Fällung von Lignin, die auch schon beim Herstell- bzw. Isolationsprozess des Lignins durchführbar ist, wie auch die sequentielle Extraktion von Lignin, sowie Ultrafiltration von Lösungen von Lignin.

Die Reinheit der Reaktivkomponente A, d.h. des Lignins und des Ligninderivats, ist von erheblicher Bedeutung. Es ist bekannt, dass sich ein zu hoher Anteil an Fremdionen schädlich auf die Kohlenstoffstruktur und die Stabilität der Carbonfaser auswirken kann. Daher ist ein niedriger Aschegehalt ein wichtiges Kriterium für die Auswahl und Reinigung des Lignins sowie des Ligninderivats. Bevorzugt ist ein niedriger Gehalt an Alkalimetallkationen, insbesondere ein geringer Anteil an Natrium und Kalium in der Reaktivkomponente A. Die Bestimmung des Aschegehaltes kann nach DIN ISO EN 3451-4 erfolgen. Die genaue Quantifizierung der enthaltenen Salze und Metalle kann über ICP-MS, Induktiv-gekoppelte Plasma-Massenspektrometrie, nach geeigneter Kalibrierung erfolgen und hat eine sehr geringe Nachweisgrenze. Zur Reduktion der Salzkonzentration von Ligninen und zum Reinigen werden einige Methoden dargelegt. Dazu zählt beispielsweise das Waschen der Lignine mit demineralisiertem Wasser wie auch mit wässriger verdünnter Salzsäure.

Bevorzugt ist daher eine Reaktivkomponente A von hoher Reinheit und mit geringem Asche- und Salzgehalt. Bevorzugt sind, wie bereits beschrieben, saubere Lignine bzw. Ligninderivate, die ein brauchbares rheologisches Verhalten aufweisen. Damit ist gemeint, dass die Reaktivkomponente A, insbesondere das Lignin, ein vorteilhaftes rheologisches Verhalten aufweist und insbesondere das Lignin im Idealfall schmelzbar ist, als Schmelze eine komplexe Viskosität von unter 1000 Pa.s, insbesondere unter 800 Pa.s, erreichen kann, wobei sie bei dieser Temperatur stabil ist, also weder einen großen Viskositätsanstieg durch Vernetzung zeigt, noch sich zersetzt oder verkohlt. Bevorzugt sind Mischungen von nicht-schmelzbaren Ligninen mit schmelzbaren Ligninen in unterschiedlichen Verhältnissen sowie Lignine oder Lignin-Mischungen, bei denen bereits zuvor chemisch modifizierte Lignine eingesetzt sind. Bevorzugt sind auch Lignine, die aus zuvor fraktionierten Ligninen künstlich nach Bedarf zu einer optimalen Komposition zusammengestellt wurden, um den Anwendungen entsprechend ein optimiertes Lignin zu erhalten. In diesem Zusammenhang ist ferner bevorzugt, ein nichtschmelzbares Lignin, auch durch Anpassung der Gehalte an weiteren Komponenten der Reaktionen, wie der Formaldehydquelle, der Weichmachers und des Reaktionsbeschleunigers, prozessierbar zu gestalten.

Ganz besonders bevorzugt sind Lignine oder Mischungen von Ligninen mit schmelzbaren Hardwood-Ligninen, die einen Na-Gehalt von unter 100 ppm und einen Aschegehalt von unter 0,1% aufweisen und eine komplexe Viskosität von unter 1000 Pa.s im Temperaturbereich von 100 bis 200°C erreichen können. Das Mischen von schmelzbaren und nicht-schmelzbaren Ligninen wurde bereits in der CA 2826061 A1 beschrieben.

Im Lichte der obigen detaillierten Beschreibung der Reaktivkomponente A gelten folgende bevorzugte Ausgestaltungen der Erfindung: So ist es bevorzugt, dass das Lignin in Form eines Kraft-Lignins, Soda-Lignins und/oder Organosolv-Lignins eingesetzt wird. Dabei ist es ganz besonders bevorzugt, wenn ein Laubholz-Lignin (Hardwood-Lignin) eingesetzt wird.

Die Reaktivkomponente A kann, wie gezeigt, auch allein als Ligninderivat oder als Gemisch des Ligninderivats und des Lignins vorliegen. Es ist bevorzugt, dass die Ligninderivate in Form eines veresterten oder veretherten Lignins eingesetzt werden.

Es hat sich als besonders vorteilhaft erwiesen, wenn das Ligninderivat durch die Formel L-O-CO-Rₓ (I), Formel L-O-R_{y} (II) und/oder Formel L-O-R_{z} (III) dargestellt ist, worin bedeuten L-O in den Formeln (I) und (II) einen veresterten oder veretherten Lignin-Rest, der Rest -CO-Rx in der Formel (I) einen Acyl-Rest, der Rest Rx und Ry einen aliphatischen und/oder aromatischen Rest und der Rest Rz in der Formel (III) einen Sulfonat-, Phosphat-, Phosphonat-, Phosphinat-, Phosphit-, Phosphonit- und/oder Phosphinit-Rest, bei deren Definition das Sauerstoffatom vom L-O einbezogen ist, wobei das Ligninderivat insbesondere einen Erweichungspunkt zwischen 80°C und 220°C aufweist.

Es hat sich gezeigt, dass die Ligninderivate gemäß den oben bezeichneten Formeln wie folgt vorteilhaft im Sinne der vorliegenden Erfindung weitergebildet werden. So ist es bevorzugt, dass der Acyl-Rest in der Formel (I) aliphatisch und/oder aromatisch ist, insbesondere aromatisch. Hierbei ist es besonders zweckmäßig, wenn der aromatische Acyl-Rest als Benzoyl-, als Methoxybenzoyl-, als 3-(4-Methoxyphenyl)propenoyl (p-Methoxy-Zimtsäure-Rest) und/oder als 3-Phenylpropenoyl-Rest (Zimtsäure-Rest) vorliegt und/oder der aliphatische Acyl-Rest einen geradkettigen oder verzweigten C₃-C₁₈-Alkanoyl-Rest und/oder einen geradkettigen oder verzweigten C₃-C₁₈-Alkenoyl-Rest darstellt. Hierbei gilt es als bevorzugt, dass der Alkanoyl-Rest als Acetyl, Propanoyl-, Butanoyl-, Pentanoyl-, Hexanoyl-, Octanoyl- und/oder Decanoyl-Rest und der Alkenoyl-Rest als Methacrylsäure-, Acrylsäure- und/oder 2-Butenoylsäure-Rest vorliegt.

Im Rahmen der Erfindung ist es besonders bevorzugt, wenn der oben angesprochene aromatische Rest Ry einen Aryl-Rest darstellt, insbesondere als Benzyl-, Methoxybenzyl- und/oder als 3-(4-Methoxyphenyl)propenyl und/oder als 3-Phenylpropenyl-Rest (Zimtalkohol-Rest) vorliegt. Des Weiteren gilt es als bevorzugt, dass der aliphatische Rest Ry ein geradkettiger oder verzweigter C₁-C₁₀-Rest, insbesondere ein Methyl-, Ethyl-, n-Propyl-, iso-Propyl-, tert.-Butyl- oder neo-Pentyl-Rest, oder ein C₃-C₁₂-Cycloalkyl-Rest, insbesondere ein Cyclohexyl-Rest, ist.

Zur Formel (III) ist auszuführen, dass diese besonders vorteilhaft im Sinne der Erfindung ausgebildet ist, wenn sie darstellt: einen Sulfonsäureester der Formel L-O-SO₂-R_{w} (IIIa), insbesondere ein Lignin-p-toluolsulfonat, ein Phosphat der Formel L-O-P(O)(OR_{w})₂ (IIIb), insbesondere ein Lignin-Diphenylphosphat, ein Phosphonat der Formel L-O-P(O)(OR_{w})(R_{w})(IIIc), insbesondere ein Lignin-Methyl-(methylphosphonat), ein Phosphinat der Formel L-O-P(O)(R_{w})₂ (IIId), insbesondere ein Lignin-Phenylphosphinat, ein Phosphit der Formel L-O-P(OR_{w})₂ (IIIe), insbesondere ein Lignin-Dimethylphosphit, ein Phosphonit der Formel L-O-P(OR_{w})(R_{w}) (IIIf), insbesondere ein Lignin-Methyl-(methylphosphonit) und/ oder ein Phosphinit der Formel L-O-P(R_{w})₂ (IIIg), insbesondere ein Lignin-Diphenylphosphinit, wobei R_{w} aliphatisch oder aromatisch ist und den Definitionen folgt, wie sie vorstehend zu dem Rest R_{y} angegeben sind und zusätzlich R_{w} einen Rest -H bedeuten kann.

Wichtig sind auch Erwägungen zu der Besetzung der Hydroxylgruppen des Lignins in der oben angesprochenen Formel (III). Hier gilt es als bevorzugt, dass 1% bis 100%, insbesondere 10% bis 60% der Hydroxyl-Reste des Lignins entsprechend der Formel (IIIa) besetzt sind und die übrigen Hydroxylgruppen verestert und/oder verethert sind und insgesamt 35% bis 100% der Hydroxylgruppen besetzt sind.

Zu den weiteren dargestellten Formeln gilt im Hinblick auf bevorzugte Ausgestaltungen, dass 1% bis 100%, insbesondere 1% bis 50% der Hydroxyl-Reste des Lignins gemäß den Formeln (IIIb), (IIIc), (IIId), (IIIe), (IIIf) und/ oder (IIIg) besetzt sind und die übrigen Hydroxylgruppen verestert und/oder verethert sind und insgesamt 35% bis 100% der Hydroxylgruppen besetzt sind.

Übergreifend gilt als bevorzugt, dass 35% bis 100%, insbesondere 60% bis 100%, der Hydroxyl-Reste des Lignins zu dessen Modifizierung über einen Acyl-Rest verestert und/oder über einen Alkyl-Rest oder Aryl-Rest verethert und/ oder durch einen Sulfonat-, Phosphat-, Phosphonat-, Phosphinat-, Phosphit-, Phosphonit- und/ oder Phosphinit-Rest besetzt sind.

In Weiterbildung dieses bevorzugten technischen Gedankens ist es besonders günstig, wenn 80 bis 100% der Hydroxyl-Reste des Lignins verestert und/oder verethert und/ oder durch einen Sulfonat-, Phosphat-, Phosphonat-, Phosphinat-, Phosphit-, Phosphonit- und/ oder Phosphinit-Rest besetzt sind.

Besonders vorteilhaft ist im Rahmen der Erfindung ein Ligninderivat, das einen Erweichungspunkt von 100°C bis 200°C, insbesondere von 120°C bis 180°C, aufweist. Gleichermaßen vorteilhaft ist es, wenn man dem zahlenmittleren Molekulargewicht (Mn) des Ligninderivats und des Lignins Aufmerksamkeit zuwendet. Dabei hat es sich als vorteilhaft erwiesen, dass das Ligninderivat und das Lignin ein zahlengemitteltes Molekulargewicht (Mn) von 200 bis 30.000, insbesondere von 300 bis 5000, aufweist, wobei auch die Bereiche von 200 bis 40000 und insbesondere von 300 bis 20000 als vorteilhaft bezeichnet werden.

Wie zum Ausdruck gebracht, spielt die Reinheit der Reaktivkomponente A für die erfolgreiche Durchführung des erfindungsgemäßen Verfahrens eine relevante Rolle. Daher ist es bevorzugt, dass die Reaktivkomponente A einen Anteil an flüchtigen Bestandteilen, ermittelt anhand des Gewichtsverlustes, nach 60 min bei einer Temperatur 50°C oberhalb der Glasübergangstemperatur T_{g} und bei Normaldruck (1 atm), von höchstens 1,0 Gew.-%, insbesondere weniger als 0,3 Gew.-%, aufweist. Des Weiteren gilt es als zweckmäßig, wenn der Aschegehalt der Reaktivkomponente A, gemessen nach DIN EN ISO 3451-4, weniger als 0,1 Gew.-% beträgt und/oder die Reaktivkomponente A weniger als 1000 ppm Fremdionen, insbesondere weniger als 500 ppm Fremdionen, insbesondere in Form von Alkalimetallionen, enthält. Ferner ist es zweckmäßig, dass die Reaktivkomponente A bei 100 bis 200°C in der Schmelze eine komplexe Viskosität unter 1000 Pa.s aufweist, wobei die komplexe Viskosität insbesondere zwischen 100 und 500 Pa.s liegt.

Als wesentlicher Bestandteil der erfindungsgemäßen Reaktionsmischung ist neben der oben erläuterten Reaktivkomponente A eine Formaldehyd freisetzende Verbindung als Reaktivkomponente B heranzuziehen: Diese Verbindung ist befähigt, kontrolliert und über äußere Einflüsse steuerbar Formaldehyd freizusetzen. Hierzu zählen 1,3,5-Trioxan, das Trimer des Formaldehyds, ein farbloser Feststoff und Paraformaldehyd, ein näherungsweise lineares Oligomer des Formaldehyds.

Die Reaktivkomponente B ist in der Lage, ein Durchvernetzen der Reaktivkomponente A, insbesondere einer Lignin-Mischung, durch verfrühte Freisetzung von Formaldehyd während des Faserherstellungsprozesses zu unterbinden. In Verbindung mit der Reaktivkomponente B und gegebenenfalls einer weichmachenden Komponente ist es möglich, je nach Wahl der Reaktivkomponente B, der Temperatur, Verweilzeit und Konzentrationen, unterschiedliche Molekulargewichte und Strukturen während der Extrusion und bei der Umwandlung zur Carbonfaser zu erzeugen sowie das rheologische Verhalten zu steuern. Es hat sich bei der Reaktivkomponente B herausgestellt, dass diese bei Raumtemperatur (20°C) fest ist und in Form von 1,3,5-Trioxan, Paraformaldehyd und/oder Hexamethylentetraamin.

Das quantitative Verhältnis von Reaktivkomponente A und Reaktivkomponente B lässt sich optimieren. So ist es für die Erzielung der gewünschten Effekte günstig, wenn auf 1 Gewichtsteil Reaktivkomponente B etwa 3 bis 20 Gewichtsteile, insbesondere 4 bis 15 Gewichtsteile Reaktivkomponente A eingesetzt werden.

Es kann der praktischen Verwirklichung der vorliegenden Erfindung förderlich sein, die erfindungsgemäße Reaktion mit einer Säure zu beschleunigen. Eine Säure beschleunigt zum einen Teil die Reaktion zum Novolak an sich, also die Kupplung von phenolartigen Verbindungen, wie Phenol, Resorcin und Lignin, über Methylenbrücken. Des Weiteren kann eine Säure den Zerfall der Formaldehydliefernden Substanz zu Formaldehyd beschleunigen. Bevorzugt sind organische Säuren, deren organische Reste eine Ähnlichkeit mit den Bausteinen des Lignins aufweisen bzw. sich mit der im Umwandungsprozess zur Carbonfaser entstehenden Einheit des Benzolrings verknüpfen und sich in die Carbonstruktur mit einbauen lassen. Ganz besonders bevorzugt sind daher Säuren wie trans-Zimtsäure und deren Derivate. Zimtsäure hat zudem eine Doppelbindung in Konjugation zum Benzolring und kann daher an Vernetzungsreaktionen teilnehmen. Bei der Reaktionsbeschleunigung der erfindungsgemäßen Reaktion ist es daher bevorzugt, reaktionsbeschleunigende organische Säuren, insbesondere in Form von Zimtsäure, Phthalsäure, Methansulfonsäure, Toluolsulfonsäure und/oder Benzoesäure, beizumischen, wobei die Reaktionsmischung hiervon 0,1 bis 5 Gew.-%, insbesondere 0,3 bis 3 Gew.-%, enthält.

Reaktivkomponente C: Es wurde vorstehend bereits zum Ausdruck gebracht, dass es für die Erfindung nützlich ist, der Reaktionsmischung weichmachende und reaktive Komponenten beizumischen. Als weichmachende Komponenten dienen in erster Linie niedermolekulare Substanzen, die in ihrer Struktur den strukturellen Unterbausteinen des Lignins ähneln. Ebenfalls können oligomere Substanzen, die mit dem Lignin vollständig mischbar sind und einen niedrigeren Schmelzpunkt aufweisen, als Weichmacher herangezogen werden.

Bevorzugt sind Verbindungen, die mindestens eine aromatische Einheit, meist einen Benzol-Ring, enthalten. Dieser kann eventuell mit weiteren Benzolringen verknüpft sein. Des Weiteren kann dieses Additiv am bereits beschriebenen Benzolring funktionelle Gruppen wie Hydroxyl (OH-)-, Alkyl-, Alkenyl- und Alkoxy (-OR)-, insbesondere Methoxygruppen, gebunden haben, sowie die Funktionalität einer Carbonsäure (-COOH) zeigen, die auch als aliphatischer oder aromatischer Ester (-COOR) dienen kann. Bevorzugt sind Resorcin, Phenol, Vanilin, Bisphenol A. Es ist bevorzugt, dieses Additiv in einer Menge von weniger als 40 Gew.-% zur Reaktivkomponente A, insbesondere zu Lignin, hinzuzugeben, insbesondere von weniger als 30 Gew.-%. Ganz besonders bevorzugt ist ein Gehalt von 5 bis 20 Gew.-%. Die genannten bevorzugten Verbindungen haben die wichtige Eigenschaft, an den chemischen Reaktionen, wie dem Molekulargewichtsaufbau über Methylenverbrückung, teilnehmen zu können. Durch Wahl dieser Verbindungen oder Mischen der Verbindungen bzw. der Konzentration, insbesondere auch in Kombination mit der Formaldehyd-Komponente, können die Fließeigenschaften der Schmelze der Reaktivkomponente A und das Ausmaß der Reaktion während der Extrusion gesteuert werden.

Im Lichte der obigen Ausführungen zu der Reaktionskomponente C haben sich folgende vorteilhafte Ausgestaltungen der Erfindung ergeben: Grundsätzlich ist es bevorzugt, dass in der Reaktivkomponente A ein Teil des Lignins und/oder des Ligninderivats durch eine zusätzliche phenolische Komponente als Reaktivkomponente C ersetzt wird. Hierbei ist es besonders zweckmäßig, als Reaktivkomponente C ein unsubstituiertes oder ein- oder mehrfach substituiertes Phenol und/oder ein unsubstituiertes und/oder ein- oder mehrfach substituiertes Bisphenol einzusetzen, insbesondere Phenol, Resorcin, Vanillin und/oder Bisphenol A. Diese Ausgestaltung wird besonders vorteilhaft fortgebildet, indem der Substituent der Reaktivkomponente C ein Alkyl- und/oder Alkenyl-Rest mit 1 bis 10 Kohlenstoffatomen und/oder ein Alkoxy-Rest mit 1 bis 10 Kohlenstoffatomen, insbesondere ein Methoxy-, Ethoxy-, Propoxy- und/oder Butoxy-Rest, ist.

Bei der praktischen Durchführung der Erfindung hat es sich als nützlich erwiesen, die vorteilhaften Mengenverhältnisse zwischen der Reaktivkomponente C und der Reaktivkomponente A (Lignin und/oder Ligninderivat) zu bedenken. Vorzugsweise entfallen auf 1 Gewichtsteil Reaktivkomponente C 3 bis 20, insbesondere 4 bis 15, Gewichtsteile Reaktivkomponente A. In diesem Zusammenhang erscheint es auch sachdienlich, vorteilhafte Mengenbeziehungen zwischen dem Lignin und dem Ligninderivat, wenn gemeinsam in der Reaktivkomponente A vorliegend, anzugeben: Hier könnte man als optimale Beziehung angeben, dass auf 1 Gewichtsteil Ligninderivat etwa 1 bis 5, insbesondere 1 bis 3, Gewichtsteile Lignin entfallen. Anzumerken ist, dass bei der Durchführung der Erfindung der Einsatz von Lignin von besonderer Bedeutung ist.

Bei dem Einbezug von weichmachenden Komponenten hat es sich als vorteilhaft erwiesen, dass die Reaktionsmischung ein Spinnadditiv D mit Weichmacherfunktion in Form einer aromatischen Verbindung enthält, die mindestens einen Benzolring und an mindestens einem Benzolring einen OH-, einen CHO-, einen COOH-, einen COORy und/oder einen Alkoxy-Rest aufweist, wobei Ry die Bedeutung hat, wie sie vorstehend im Zusammenhang mit den Formeln zur Reaktivkomponente A dargestellt wurde. Hierbei ist es bevorzugt, dass der Alkoxyrest des Spinnadditivs D 1 bis 10 Kohlenstoffatome aufweist, insbesondere als Methoxy-, Ethoxy-, 2-Propoxy-, n-Propoxy-, tert.-Butoxy-, Isobutoxy-, sec-Butoxy- und/oder n-Butoxy-Rest vorliegt.

Zweckmäßig ist es, dass das Spinnadditiv D in der Reaktionsmischung in einer Menge von weniger als 30 Gew.-%, insbesondere von weniger als 15 Gew.-%, vorliegt. Dabei ist es besonders bevorzugt, dass das Spinnadditiv D in der Reaktionsmischung in einer Menge von mindestens 0,5 Gew.-%, insbesondere in einer Menge von 1 bis 5 Gew.-%, enthalten ist.

Für ein verbessertes Spinnverhalten und verbesserte mechanische Eigenschaften der Precursorfasern kann es vorteilhaft sein, dass die erfindungsgemäße Reaktionsmischung ein Hilfspolymer E mit Vernetzer- und/oder mit Weichmacherfunktion enthält, wobei dieses Hilfspolymer E vorzugsweise einen Erweichungspunkt zwischen 130°C und 220°C aufweist. Hierbei ist es besonders bevorzugt, dass das Hilfspolymer E einen Erweichungspunkt von 130°C bis 200°C, insbesondere von 150°C bis 180°C, aufweist. Zweckmäßigerweise ist hierbei das Hilfspolymer E ein gesättigter Polyester, ein Polyamid, ein Polyoxymethylen und/oder veresterte Cellulose. Hierbei kommt insbesondere das Celluloseacetatbutyrat in Frage.

Des Weiteren gilt es als vorteilhaft, wenn das Hilfspolymer E in der Reaktionsmischung in einer Menge von mindestens 10 Gew.-%, vorzugsweise von 15 bis 50 Gew.-%, insbesondere von 15 bis 35 Gew.-%, vorliegt.

Übergreifender Gedanke der Erfindung ist es, wie gezeigt, dass eine spezielle Reaktionsmischung einer Reaktivextrusion unterworfen wird, dies im Rahmen eines Schmelzprozesses und einer Extrusion. In einem späteren Schritt des Spinnens oder im unmittelbaren anschließenden Spinnen erfolgt die Weiterverarbeitung. Die Reaktionsmischung weist daher einen Erweichungsbereich bzw. Schmelzbereich von vorzugsweise 100°C bis 200°C auf, insbesondere zwischen 120°C und 180°C. Innerhalb dieses Temperaturfensters sollte die Reaktionsmischung eine komplexe Viskosität von zweckmäßigerweise unter 1500 Pa.s aufweisen, wobei die Mischung über einen Verarbeitungszeitraum von mindestens 30 min stabil ist, vorzugsweise unter 1300 Pa.s, insbesondere unter 1000 Pa.s, wobei der Bereich von 10 bis 1000 Pa.s besonders bevorzugt ist hinsichtlich der Rheologie eine Viskosität im Bereich sinkender Viskosität bei Temperaturanstieg zwischen 10 und 1000 Pa.s, insbesondere von 100 bis 500 Pa.s. Generell muss der viskose Anteil der Schmelze in diesem Bereich über den elastischen Anteil mit Abstand dominieren, damit ein Fadenziehvermögen gegeben ist.

Weiteres zur Reaktivextrusion: Die Herstellung der Lignin-basierten Carbonfasern beginnt im ersten Schritt mit der reaktiven Extrusion des Lignins bzw. des Ligninderivats mit den weiteren erfindungsgemäßen Komponenten, gefolgt vom Prozess des Schmelzspinnens zu Filamenten. Die Extrusion betrifft die Compoundierung der einzelnen Komponenten und gegebenenfalls deren Reaktion untereinander. Diese findet in einem Extruder statt, vorzugsweise einem Doppelschneckenextruder, der zum Vermischen besser geeignet ist. Die einzelnen Komponenten der Reaktion können dem Extruder bereits vorgemischt zudosiert werden. Möglich ist auch die simultane separate Dosierung der nur teilweise vorgemischten Komponenten. Der Extruder hat im Idealfall verschiedene Heizzonen, die individuell voneinander eingestellt werden können. Die Dosierung kann mit Hilfe von Feststoffdosiersystemen durchgeführt werden. Insbesondere können die Edukte in Pulverform dosiert werden. Nach der Extrusionslinie ist der Spinnanbau vorzugsweise am Extruder befestigt, der über mindestens eine Spinnpumpe verfügt, die einen konstanten Druck der Schmelze auf das Spinnpaket mit Spinndüse ausübt und einen konstanten Massefluss garantieren soll. Diese Einheiten sind individuell beheizbar. Die verwendeten Spinndüsen besitzen vorzugsweise etwa 10 bis 10.000 Spinndüsen pro Spinnpaket, insbesondere 100 bis 1000 Spinndüsen pro Spinnpaket. Der Düsendurchmesser beträgt vorzugsweise etwa 100 bis 500 µm, insbesondere 150 bis 300 µm.

Das nach der Reaktivextrusion erhaltene Erzeugnis kann unmittelbar oder auch nach Zwischenlagerung versponnen werden. Gegenstand der Erfindung ist demzufolge auch die Verwendung der nach dem erfindungsgemäßen Verfahren erhaltenen schmelzspinnbaren Lignin-basierten Zusammensetzung zur Herstellung von Precursorfasern von Carbonfasern durch Schmelzextrusion bei erhöhter Temperatur, insbesondere in einem Temperaturbereich von 100 bis 200°C, und anschließende Thermostabilisierung der erhaltenen Precursorfasern.

Von besonderer Bedeutung ist es, um vorteilhafte Carbonfasern aus den erfindungsgemäß erhaltenen Precursorfasern herzustellen, vor der Carbonisierung eine Thermostabilisierung der Precursorfasern durchzuführen. Dies erfolgt vorzugsweise in einem Temperaturbereich von 100 bis 400°C, insbesondere von 200 bis 300°C. Dabei ist es bevorzugt, dass die Thermostabilisierung als oxidative Thermostabilisierung und/oder Stabilisierung mit hochenergetischer Strahlung durchgeführt wird. Die Thermostabilisierung mit hochenergetischer Strahlung beruht vorzugsweise auf einer Ultraviolettstrahlung (UV), Vakuum-Ultraviolettstrahlung (VUUV), Elektronenstrahlung, Röntgenstrahlung und/oder Gammastrahlung. Die oxidative Thermostabilisierung wird zweckmäßigerweise bei einer Endtemperatur von 100°C bis 400°C, insbesondere von 200°C bis 300°C, durchgeführt. Besonders bevorzugt ist dabei der Bereich von 220°C bis 275°C. Die Stabilisierungsarten können demzufolge oxidativ wie auch unter inerter Atmosphäre, insbesondere Stickstoff, durchgeführt werden. Beide Stabilisierungsarten beruhen unter anderem auf der thermisch induzierten Vernetzung der Lignin-Moleküle innerhalb der Precursorfaser. Dies hat u.a. zur Folge, dass die Faser unschmelzbar wird und im weiteren Schritt mit höherer Heizrate carbonisiert werden kann.

Besonders in Hinblick auf das Vorhandensein der Reaktivkomponente B der Erfindung, d.h. die Formaldehyd freigebende Verbindung, ist die Behandlung der gesponnenen Lignin-Fasern mit hochenergetischen Strahlen, wie Elektronenstrahlen, hervorzuheben. Es ist literaturbekannt, dass durch Einwirken der Strahlung auf Formaldehyd dieses polymerisiert oder trimerisiert werden kann. Es ist erfindungsgemäß möglich, selbiges Produkt wieder *in situ* innerhalb der Faser zu Formaldehyd zu zersetzen und so eine getriggerte chemische Vernetzung hervorzurufen. Während der Stabilisierung soll die Faser einer konstanten Zugkraft ausgesetzt sein.

Der besondere Vorteil der Erfindung besteht darin, dass die in oben beschriebener Weise hergestellten Precursorfasern vorteilhaft zur Herstellung von Carbonfasern durch Carbonisierung, gegebenenfalls mit anschließender Graphitisierung, herangezogen werden können. Vorzugsweise erfolgt dabei die Carbonisierung durch Erhitzen der stabilisierten Fasern unter Schutzgas im Temperaturbereich von 200°C bis 2000°C, insbesondere von 250°C bis 1800°C. Bevorzugt wird auf maximal 1400°C erhitzt. Zweckmäßigerweise haben die erhaltenen Carbonfasern, die gegebenenfalls graphitisiert sind, einen Kohlenstoffgehalt von > 98 Gew.-%. Auch während der Carbonisierung soll die Faser eine konstante Zugkraft in Faserachse spüren. Die anschließende Graphitisierung, die gegebenenfalls durchgeführt werden kann, erfolgt vorzugsweise durch eine thermische Behandlung bei 1700°C bis 3000°C, insbesondere 2000°C bis 2500°C, unter Schutzgas. Die graphitisierten Fasern weisen einen höheren E-Modul als herkömmliche carbonisierte Fasern auf. Die erfindungsgemäß erreichten Bestwerte liegen bei etwa 294 GPa (DIN EN ISO 5079).

Zusammenfassend lässt sich feststellen, dass, wie oben gezeigt, die Erfindung vielfältige Vorteile zeigt:
Die Erfindung betrifft ein einfaches Verfahren zur Herstellung einer schmelzbaren Lignin-basierten Zusammensetzung und die Erzeugung vorteilhafter Lignin-basierter Precursorfasern und deren Weiterverarbeitung zu nützlichen Carbonfasern. Die Synthese der Precursorfasern bzw. des Ausgangsmaterials hierzu zeichnet sich dadurch aus, dass mit Hilfe einer einfach durchzuführenden Reaktivextrusion eine Reaktivkomponente A, insbesondere basierend auf Lignin und/oder einem Ligninderivat, einer Reaktivkomponente B, die eine Formaldehyd freisetzende Verbindung darstellt, und gegebenenfalls Phenolderivaten sowie des Weiteren gegebenenfalls weitere Additive zusammen coextrudiert werden. Dabei reagieren sie bereits teilweise miteinander zu Verbindungen, die sich auf optimale Weise aus der Schmelze zu Precursorfasern verarbeiten lassen. Während der Umwandlung der Lignin-basierten Precursorfasern zu Carbonfasern kann die chemische Reaktion weiter ablaufen. Daraus resultieren Carbonfasern mit hohen Zugfestigkeiten und sehr hohen E-Modulen, so Zugfestigkeiten von bis zu etwa 2,44 GPa sowie E-Module von bis zu etwa 294 GPa. Diese Reaktion äußert sich auch in einem vorteilhaften Molekulargewichtsaufbau, der Erzeugung von Novolak-artigen Substanzen und auch in einer vorteilhaften Vernetzung des Materials.

Demzufolge bezieht sich der Kern der vorliegenden Erfindung bevorzugt nicht auf die Herstellung von Harzen als Bindemittel oder Adhäsive oder Formteile an sich und bezieht sich weniger auf die Synthese von Novolak-Harzen im Rührkessel, sondern auf die Kombination der Reaktion von Lignin bzw. einem Ligninderivat mit Formaldehyd und Additiven im Extruder und die (vorzugsweise gleichzeitige) Formgebung der Reaktionsmasse. Insbesondere ist das Schmelzspinnen von Fasern angesprochen, die ihre Anwendung als neuartige Precursoren für Carbonfasern finden.

Die Herausforderung, der sich die Erfindung gestellt hat, ist es, neben wünschenswerten Carbonfaserqualitäten, das Verfahren derartig einzustellen, dass die rheologischen Eigenschaften des Verfahrenserzeugnisses, welche sich mit der Reaktion im Extruder ändern, optimal zum Verspinnen zu Fasern geeignet machen. Dies ist vollumfänglich gelungen. Es ist durchaus gewollt, dass die Reaktion im Extruder und im Spinnkopf nicht vollständig abläuft, sondern sich während der thermischen oder strahleninduzierten Stabilisierung fortsetzen kann.

Im Hinblick auf die Bedeutung der "Reaktivextrusion" erscheinen folgende ergänzende Betrachtungen sinnvoll:
Die Reaktivextrusion dient nicht allein dazu, die Spinnmasse in Gänze einer Vernetzung zu unterziehen, sondern dem gesteuerten Aufbau einer höheren Molmasse zur Verbesserung der Spinnfähigkeit und der Anbindung der Reaktivkomponenten an das Lignin. Die im Stand der Technik bekannten nasschemischen Prozesse erfordern im Vergleich zur Erfindung den Umgang mit nicht-wässrigen Lösungsmitteln, was durch Rückgewinnung des Lösungsmittels und das notwendige Trocknen der Precursorfaser erhebliche Verfahrenskosten erzeugt. Eine Reaktion der Komponenten beim erfindungsgemäßen Verfahren im gewählten Extruder heißt nicht zwangsweise, dass diese weitgehend vernetzend ist. Eine nichtvernetzende Reaktion (linearer Molekulargewichtsaufbau) stellt kein Problem dar und kann durchaus erwünscht sein. In diesem Sinne kann davon ausgegangen werden, dass die Reaktivextrusion als solche bezeichnet werden kann, nur eben nicht zwangsweise in Gänze als Vernetzungsreaktion. Die gewünschte vollständige Vernetzung soll erst in der ersponnenen Precursorfaser erfolgen. Hier hat eine Vernetzung besondere positive Auswirkungen auf die Eigenschaften der stabilisierten Fasern und der Carbonfasern.

Ersichtlich erfolgt die endgültige Vernetzung der Lignin-Precursorfasern in dem nachfolgenden Schritt der Thermostabilisierung. Hierbei reagieren sowohl die Ligninmoleküle untereinander als auch durch Verbrückung mittels des freigesetzten Formaldehyds. Von besonderem Vorteil ist es dabei, dass die vollkommene Freisetzung des Formaldehyds insbesondere erst bei der thermischen Vernetzung bzw. Thermostabilisierung erfolgt. Eine Beimischung von freiem Formaldehyd zu der Spinnmasse nach dem Stand der Technik erfordert dagegen bei einer technischen Umsetzung den umfangreichen Einsatz von Sicherungsmaßnahmen gegen dessen Freisetzung.

Zu der Vernetzungsreaktion in der Precursorfaser aufgrund einer Thermostabilisierung scheinen folgende Darstellungen nützlich: Zunächst geht die Vernetzungsreaktion nach der Reaktivextrusion weiter. Hierbei sind drei Grenzfälle vorstellbar: 1.) Die Vernetzung läuft größtenteils während der Extrusion ab, dies mit der Folge, dass das Verfahrenserzeugnis nicht mehr schmelzbar ist. Damit wird der Zweck des erfindungsgemäßen Verfahrens nicht erreicht. Eine relevante Steuerung liegt darin, dass die Extrusion abgebrochen wird, wenn die komplexe Viskosität den erfindungsgemäßen Grenzwert (sh. oben) überschreitet. Dies wäre ein nicht erfindungsgemäßes Vorgehen. 2.) Die Vernetzung läuft teilweise (bis zu einem gewissen Grad) im Sinne der Erfindung ab, wobei ebenfalls die obige Anforderung an die komplexe Viskosität zu bedenken ist. 3.) Es läuft während der Reaktivextrusion keinerlei Vernetzung ab. Die Komponente B ist unter den Extrusionsbedingungen latent, wirkt aber reaktiv bei der anschließenden Thermostabilisierung der Fasern. Dennoch kann weiterhin von einer vorausgehenden "Reaktivextrusion" gesprochen werden.

Das Verfahren zur Herstellung der Precursorfasern zeichnet sich durch Einfachheit und kostengünstige Produktionsmöglichkeiten aus. So können chemische Modifizierungen des Lignins, des Molekulargewichtsaufbaus der Extrusion und des Spinnprozesses in einem einzigen technischen Schritt vollzogen werden. Neben dem Lignin als Biopolymer ist es auch denkbar, die weiteren Komponenten der erfindungsgemäßen Reaktion, biobasiert hergestellt, einzusetzen. So lassen sich beispielsweise die Formaldehyd-Komponenten auf Basis von biobasiertem Methanol über katalytische und oxidative Verfahren herstellen.

Ein besonderer Vorteil der Erfindung liegt darin, dass sie die Möglichkeit erschließt, die Reaktivität der Reaktivkomponente A mit der Reaktivkomponente B in einfachster Form zu beschleunigen. Dies erfolgt durch Verbindungen, die als verknüpfende Bausteine wie auch als Weichmacher wirken. Weitere Komponenten mit zusätzlicher weichmachender Wirkung helfen die Verarbeitung und Handhabung der Schmelze und der Fasern zu verbessern. Andere Komponenten beschleunigen die Reaktion mit Formaldehyd. Polymere verbessern die mechanischen Eigenschaften der Lignin-Fasern und diejenigen der Schmelze.

Im Ergebnis lässt sich feststellen, dass das erfindungsgemäße Verfahren, d.h. zur Herstellung der schmelzspinnbaren Lignin-basierten Zusammensetzung sowie die Weiterverarbeitung desselben zu Precursorfasern und nachfolgend zu Carbonfasern, dem Fachmann vielfältige nützliche Steuerungsmöglichkeiten zur Verfügung stellt, um ein besonders vorteilhaftes Verfahrenserzeugnis zu erhalten.

Die Erfindung wird nachfolgend anhand von Beispielen noch näher erläutert.

### Beispiele

### Beispiel 1 (Lignin-Paraformaldehyd-Phenol-Reaktivextrusion)

(Prozentangaben beziehen sich hier, wie in folgenden Beispielen, auf die Gesamtmischung).

Compoundierung: Ein Hartholz-Lignin (85 %) wird mit Paraformaldehyd (10%) und Phenol (5%) vermischt und kontinuierlich in einen Doppelschneckenextruder, Leistritz, dosiert. Die Extrudertemperatur beträgt in der ersten Zone 120°C, in allen weiteren späteren Zonen 140°C. Die Dosiergeschwindigkeit richtet sich nach der Fördergeschwindigkeit des Extruders. Die Schneckendrehzahl beträgt 250 U/min. Am Extruder wird mit Hilfe einer Vakuumpumpe die Schmelze entgast. Die extrudierte Schmelze wird direkt durch ein Spinnpaket, der nachfolgend zum Extruder angebaut ist, bestehend aus einer Spinnpumpe und Spinndüse, zu Filamenten versponnen. Für den Fall des Zwischenlagerns der Schmelze befindet sich direkt nach der Extrusionslinie eine Granulier- bzw. Schneidemaschine, die nach Erkalten der Schmelze Granulat erzeugt.

Im Falle des separaten Verspinnens des compoundierten Ligningranulats wird das Granulat einem Einschneckenextruder, Haake Rheomex OS, zugefügt. Die Temperatur der Heizzonen beträgt in der ersten Zone 120°C, in allen weiteren 140°C. Eine anschließend angebrachte Spinnpumpe fördert die Schmelze durch die Spinndüse (13 x 200 µm). Die Schmelzfäden erhärteten über eine Fallstrecke von 4 m und können aufgewickelt werden.

### Beispiel 2 (Lignin-1,3,5-Trioxan-Resorcin-Zimtsäure-Reaktivextrusion)

Lignin wird mit 1,3,5-Trioxan (22%) und Resorcin (6%), sowie Zimtsäure (4%) vermischt und homogenisiert und wie in Beispiel 1 kontinuierlich einem Doppelschneckenextruder zugeführt und extrudiert. Die Extrudertemperatur betrug in der ersten Zone 120°C, in allen weiteren späteren Zonen 135°C.

Das erhaltene Granulat wird mit Hilfe eines Einschneckenextruders, Haake Rheomex OS, über eine Spinndüse (13 x 200 µm) versponnen. Die Temperatur beträgt in der ersten Zone 120°C, in allen weiteren Heizzonen 135°C.

### Beispiel 3 (Reaktivextrusion von Lignin-Mischungen im kleinen Maßstab)

Spinnversuche werden am Kleinextruder Thermo Haake MiniLab II durchgeführt.
**a:** Analoge Mischung aus Beispiel 2
**b:** Analoge Mischung aus Beispiel 1
**c:** Mischung analog zu Beispiel 2, Lignin zu gleichen Teilen aus Softwood-Lignin und Hardwood-Lignin.
   Ein Softwood-Lignin wird zu gleichen Teilen mit einem Hardwood-Lignin gemischt und 1,3,5-Trioxan (22%) und Resorcin (6%), sowie Zimtsäure (4%) hinzugefügt und homogenisiert. Die Feststoffmischung wird am Kleinextruder bei 150°C Extrudertemperatur compoundiert und versponnen.
**d:** Lignin-Paraformaldehyd-Phenol
   Lignin wurde mit Paraformaldehyd (5%) und Phenol (10%) vermischt und homogenisiert. Die Feststoffmischung wird am Kleinextruder für 20 min bei 160°C im Kreislauf geführt und anschließend versponnen.
**e:** Zimt-Lignin - 1,3,5-Trioxan - Resorcin

Zuvor durch Veresterung synthetisiertes Zimt-Lignin wird mit 1,3,5-Trioxan (22%) und Resorcin (6%) vermischt und am Kleinextruder bei 140 °C zu Monofilamenten über eine Spinndüse mit 0,5 mm Lochdurchmesser versponnen und aufgewickelt.

### Beispiel 4 (Thermostabilisierung und Carbonisierung der Lignin-Precursorfasern aus Beispiel 3a)

Die Lignin-Precursorfasern werden oxidativ thermostabilisiert. Hierbei werden die Fasern von Raumtemperatur mit einer Heizrate von 0,25 K/min unter Luft in einem Muffelofen der Firma Nabertherm auf 250°C erhitzt. Die Fasern wurden hierbei als Monofilament eingesetzt. Die Monofilamente werden auf Graphitsubtraten an ihren Enden fixiert. Auch ist die Thermostabilisierung der Fasern als Faserbündel möglich, auf das während der thermischen Behandlung ein Zugspannung ausgeübt wird. Die Carbonisierung erfolgt mit derselben Vorrichtung und Fixierung bzw. Zugbehandlung wie bei der Thermostabilisierung. Carbonisiert wird unter reinem Stickstoff von Raumtemperatur bis 1000°C und einer Heizrate von 10 K/min in einem Hochtemperaturofen des Herstellers Gero.

Man erhält Carbonfasern mit Durchmessern im Bereich von 25 bis 10 µm, im Mittel von 17 µm. Die Zugfestigkeiten, Dehnungen und E-Moduln der Fasern werden mit Hilfe des Prüfgerätes Favimat der Firma Textechno ermittelt. Man erhält für die Fasern Zugfestigkeiten bis 2,44 GPa, im Mittel 0,71 GPa und Moduln bis 294 GPa, im Mittel 96 GPa. Die Dichte der Fasern beträgt 1,62 g/cm³.

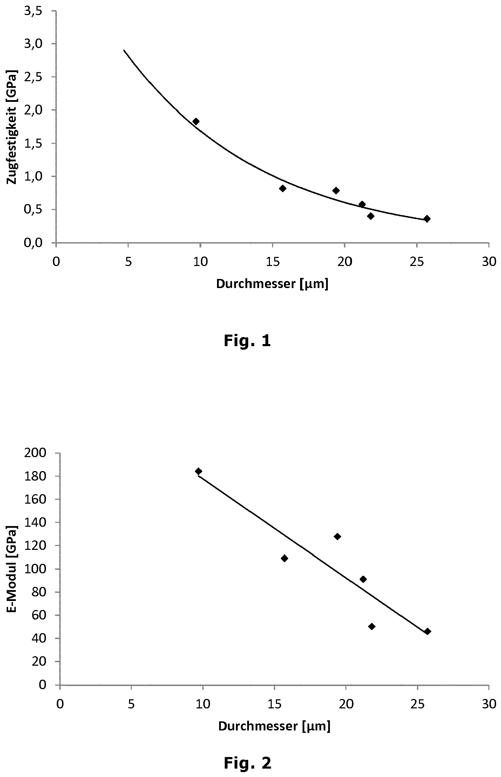

Zu diesen Werten sei auf die beiliegenden Fig. 1 und 2 verwiesen. In der Fig. 1 findet sich der Auftrag der gemessenen Zugfestigkeiten und in der Fig. 2 derjenige der gemessenen E-Module der Carbonfasern in Abhängigkeit von verschiedenen Faserdurchmessern.

### Beispiel 5 (Thermostabilisierung und Carbonisierung der Lignin-Fasern aus Beispiel 3b)

Die Lignin-Fasern werden analog zu Beispiel 4 oxidativ bis 250°C thermostabilisiert und anschließend bis 1000°C unter Stickstoffatmosphäre carbonisiert.

Man erhält Carbonfasern mit Durchmessern im Bereich von 29 bis 17 µm, im Mittel von 23 µm. Die Zugfestigkeiten, Dehnungen und E-Moduln der Fasern wurden mit Hilfe des Prüfgerätes Favimat der Firma Textechno ermittelt. Man erhält für die Fasern Zugfestigkeiten bis 0,74 GPa, im Mittel 0,48 GPa und Moduln bis 64 GPa, im Mittel 46 GPa. Die Dichte der Carbonfasern beträgt 1,6 g/cm³.

### Beispiel 6 (Thermostabilisierung und Carbonisierung der Lignin-Fasern aus Beispiel 3c)

Die Lignin-Fasern werden analog zu Beispiel 4 oxidativ bis 250°C thermostabilisiert und anschließend bis 1000°C unter Stickstoffatmosphäre carbonisiert.

Man erhält Carbonfasern mit Durchmessern im Bereich von 50 bis 26 µm, im Mittel von 37 µm. Man erhält für die Fasern Zugfestigkeiten bis 0,63 GPa, im Mittel 0,40 GPa und Moduln bis 149 GPa, im Mittel 63 GPa.

### Beispiel 7 (Thermostabilisierung und Carbonisierung der Lignin-Fasern aus Beispiel 3d)

Die Lignin-Fasern werden analog zu Beispiel 4 oxidativ bis 250°C thermostabilisiert und anschließend bis 1000°C unter Stickstoffatmosphäre carbonisiert. Man erhält Kohlenstofffasern mit Durchmessern zwischen 12 und 25 µm, im Mittel 20 µm. Es resultiert eine mittlere Zugfestigkeit von 0,58 GPa mit einer maximalen Zugfestigkeit von 1,1 GPa und ein E-Modul von 61 GPa, maximal 97 GPa.

### Beispiel 8 (Thermostabilisierung und Carbonisierung der Lignin-Fasern aus Beispiel 2)

Die Lignin-Fasern werden analog zu Beispiel 4 oxidativ bis 250°C thermostabilisiert und anschließend bis 1000°C unter Stickstoffatmosphäre carbonisiert.

Man erhält Carbonfasern mit Durchmessern im Bereich von ∼30 µm. Die Zugfestigkeiten, Dehnungen und E-Moduln der Fasern werden mit Hilfe des Prüfgerätes Favimat der Firma Textechno ermittelt. Man erhält mittlere Zugfestigkeiten von 0,54 GPa und Moduln im Mittel von 82 GPa, maximal 113 GPa.

### Beispiel 9 (Verspinnen von Lignin mit Hilfspolymer)

Jeweils 20, 40 und 50 Gewichtsprozent Cellulose-Acetat-Butyrat, 22 Gew.-% 1,3,5-Trioxan und 6 Gew.-% Resorcin wurden mit den angepassten Mengen an Organosolv-Lignin (52, 32 bzw. 22 Gew.-%) vermischt und bei 170 °C im Kleinextruder compoundiert und versponnen. Die Fasern konnten leicht abgewickelt werden und waren nicht spröde.

### Beispiel 10 (Stabilisierung und Carbonisierung von Fasern aus Lignin mit Hilfspolymer)

Die Lignin-Fasern aus Beispiel 9 wurden analog zu Beispiel 8 oxidativ bis 250 °C thermostabilisiert und anschließend bis 1000 °C unter Stickstoffatmosphäre carbonisiert. Man erhielt Carbonfasern, die in der Rasterelektronenmikroskopie einen kompakten Querschnitt ohne Phasenseparation und eine homogene Oberfläche zeigten.

### Beispiel 11 (Schnelle oxidative thermische Stabilisierung von Lignin-Fasern)

Die Fasern aus Beispiel 2 wurden in Graphitschiffchen gelegt, mechanisch fixiert und bei Raumtemperatur (20°C) mit einer Heizrate von 1° Kelvin/min unter Luft in einem Muffelofen der Firma Nabertherm GmbH innerhalb von 4 Stunden auf 250 °C erhitzt. Die Fasern behielten ihre Faserform bei, zeigten keine Verklebungen oder Tropfenbildung.

### Beispiel 12 (Faser aus Gras-Lignin)

Miscanthus-Lignin wurde mit Hilfe eines Organosolv-Verfahrens aus Miscanthus-Stroh (*Miscanthus* × *giganteus*) gewonnen. Das Lignin wurde in das Acetyl-Derivat überführt und konnte unter Zusatz von 1,3,5-Trioxan (22 %) und Resorcin (6 %) bei 120 °C stabil zu Fasern schmelzgesponnen werden.

## Patentansprüche

1. Verfahren zur Herstellung einer schmelzspinnbaren Lignin-basierten Zusammensetzung, **dadurch gekennzeichnet, dass** eine Reaktionsmischung, die Lignin und/oder ein Ligninderivat in Form eines veresterten oder veretherten Lignins als Reaktivkomponente A und eine bei 20°C feste Formaldehyd freisetzende Verbindung als Reaktivkomponente B in Form von 1,3,5-Trioxan, Paraformaldehyd und/oder Hexamethylentetramin enthält, bei erhöhter Temperatur einer Reaktivextrusion unterworfen wird, wobei die Reaktionsmischung auf eine komplexe Viskosität unter 1500 Pa.s, insbesondere von 10 bis 1300 Pa.s, eingestellt wird.

2. Verfahren nach Anspruch 1, **dadurch gekennzeichnet, dass** das Lignin in Form eines Kraft-Lignins, Soda-Lignins und/oder Organosolv-Lignins, vorzugsweise ein Laubholz-Lignin (Hardwood-Lignin), ein Nadelholz-Lignin (Softwood-Lignin) und/oder ein Gras-Lignin eingesetzt wird.

3. Verfahren nach einem der Ansprüche 1 oder 2, **dadurch gekennzeichnet, dass** das Ligninderivat durch die
Formel L-O-CO-Rₓ (I),
Formel L-O-R_{y} (II) und/oder
Formel L-O-R_{z} (III)
dargestellt ist, worin bedeuten
L-O in den Formeln (I) und (II) einen veresterten oder veretherten Lignin-Rest, der Rest -CO-Rx in der Formel (I) einen Acyl-Rest,
der Rest Rx und Ry einen aliphatischen und/oder aromatischen Rest
und der Rest Rz in der Formel (III) einen Sulfonat-, Phosphat-, Phosphonat-, Phosphinat-, Phosphit-, Phosphonit- und/ oder Phosphinit-Rest, bei deren Definition das Sauerstoffatom vom L-O einbezogen ist.

4. Verfahren nach mindestens einem der Ansprüche 1 bis 3, **dadurch gekennzeichnet, dass** das Ligninderivat ein zahlenmittleres Molekulargewicht (Mn) von 200 bis 40000, insbesondere von 300 bis 20000, aufweist.

5. Verfahren nach mindestens einem der vorhergehenden Ansprüche, **dadurch gekennzeichnet, dass** der Aschegehalt der Reaktivkomponente A, gemessen nach DIN EN ISO 3451-4, weniger als 0,1 Gew.-% beträgt und/oder die Reaktivkomponente A weniger als 1000 ppm Fremdionen, insbesondere weniger als 500 ppm Fremdionen, insbesondere in Form von Alkalimetallionen, enthält.

6. Verfahren nach mindestens einem der vorhergehenden Ansprüche, **dadurch gekennzeichnet, dass** die Reaktivkomponente A bei 100 bis 200°C in der Schmelze eine komplexe Viskosität unter 1000 Pa.s aufweist, wobei die komplexe Viskosität insbesondere zwischen 100 und 500 Pa.s liegt.

7. Verfahren nach mindestens einem der vorhergehenden Ansprüche, **dadurch gekennzeichnet, dass** in der Reaktivkomponente A ein Teil des Lignins und/oder des Ligninderivats durch eine zusätzliche phenolische Komponente als Reaktivkomponente C ersetzt wird.

8. Verfahren nach Anspruch 7, **dadurch gekennzeichnet, dass** als Reaktivkomponente C ein unsubstituiertes und/oder ein- oder mehrfach substituiertes Phenol und/oder unsubstituiertes und/oder substituiertes ein- oder mehrfach substituiertes Bisphenol eingesetzt wird, insbesondere Phenol, Resorcin, Vanillin und / oder Bisphenol A, wobei der Substituent der Reaktivkomponente C vorzugsweise ein Alkyl- und/oder Alkenyl-Rest mit 1 bis 10 Kohlenstoffatomen und/oder ein Alkoxy-Rest mit 1 bis 10 Kohlenstoffatomen, insbesondere ein Methoxy-, Ethoxy-, Propoxy- und/oder Butoxy-Rest, ist.

9. Verfahren nach mindestens einem der vorhergehenden Ansprüche, **dadurch gekennzeichnet, dass** auf 1 Gewichtsteil Reaktivkomponente B 3 bis 20 Gewichtsteile, insbesondere 4 bis 15 Gewichtsteile Reaktivkomponente A eingesetzt werden.

10. Verfahren nach mindestens einem der vorhergehenden Ansprüche, **dadurch gekennzeichnet, dass** die Temperatur während der Durchführung der Reaktivextrusion auf 120 bis 180°C eingestellt wird.

11. Verfahren nach mindestens einem der vorhergehenden Ansprüche, **dadurch gekennzeichnet, dass** der Reaktionsmischung reaktionsbeschleunigende organische Säuren beigemischt werden, insbesondere in Form von Zimtsäure, Phthalsäure, Methansulfonsäure, Toluolsulfonsäure und/oder Benzoesäure, wobei die Reaktionsmischung hiervon bevorzugt 0,1 bis 5 Gew.-%, insbesondere 0,3 bis 3 Gew.-%, enthält.

12. Verfahren nach mindestens einem der vorhergehenden Ansprüche, **dadurch gekennzeichnet, dass** die Reaktionsmischung ein Spinnadditiv (D) mit Weichmacherfunktion in Form einer aromatischen Verbindung enthält, die mindestens einen Benzolring und an mindestens einem Benzolring einen OH-, einen CHO-, einen COOH-, einen COORy-, Ry mit der vorstehend angegebenen Bedeutung, und/oder einen Alkoxy-Rest aufweist, wobei der Alkoxy-Rest des Spinnadditivs (D) vorzugsweise 1 bis 10 Kohlenstoffatome aufweist, insbesondere als Methoxy-, Ethoxy-, 2-Propoxy-, n-Propoxy-, tert-Butoxy-, Isobutoxy-, sec-Butoxy- und/oder n-Butoxy-Rest vorliegt.

13. Verfahren nach Anspruch 12, **dadurch gekennzeichnet, dass** das Spinnadditiv (D) in der Reaktionsmischung in einer Menge von weniger als 30 Gew.-%, insbesondere von weniger als 15 Gew.-%, vorzugsweise in einer Menge von mindestens 0,5 Gew.-%, insbesondere in einer Menge von 1 bis 5 Gew.-%, vorliegt.

14. Verfahren nach mindestens einem der vorhergehenden Ansprüche, **dadurch gekennzeichnet, dass** die Reaktionsmischung ein Hilfspolymer (E) mit Vernetzer- und/oder mit Weichmacherfunktion enthält.

15. Verfahren nach mindestens einem der vorhergehenden Ansprüche, **dadurch gekennzeichnet, dass** das Hilfspolymer (E) als gesättigter Polyester, Polyamid, Polyoxymethylen, Polymethylmethacrylat und/oder veresterte Cellulose vorliegt.

16. Verfahren nach Anspruch 14, **dadurch gekennzeichnet, dass** das Hilfspolymer (E) in der Reaktionsmischung in einer Menge von mindestens 10 Gew.-%, vorzugsweise von 15 bis 50 Gew.-%, insbesondere von 15 bis 35 Gew.-%, vorliegt.

17. Verwendung der nach dem Verfahren gemäß einem der vorhergehenden Ansprüche erhaltenen schmelzspinnbaren Lignin-basierten Zusammensetzung zur Herstellung von Precursorfasern von Carbonfasern durch Schmelzextrusion bei erhöhter Temperatur, insbesondere in einem Temperaturbereich von 100 bis 200°C, und anschließende Thermostabilisierung der erhaltenen Precursorfasern, wobei das Verfahren zur Herstellung der Precursorfasern vorzugsweise in unmittelbarem Anschluss an das Verfahren zur Herstellung der schmelzverspinnbaren Lignin-basierten Zusammensetzung durchgeführt wird, wobei bei der Schmelzextrusion vorzugsweise ein Doppelschneckenextruder herangezogen wird.

18. Verwendung nach Anspruch 17, **dadurch gekennzeichnet, dass** die Thermostabilisierung der Precursorfasern in einem Temperaturbereich von 100 bis 400°C, insbesondere von 200 bis 300°C, insbesondere als oxidative Thermostabilisierung und/oder Stabilisierung mit hochenergetischer Strahlung, durchgeführt wird.

19. Verwendung nach Anspruch 18, **dadurch gekennzeichnet, dass** als hochenergetische Strahlung eine Ultraviolettstrahlung (UV), Vakuum-Ultraviolettstrahlung (VUUV), Elektronenstrahlung, Röntgenstrahlung und/oder Gammastrahlung durchgeführt wird.

20. Verwendung nach Anspruch 18 oder 19, **dadurch gekennzeichnet, dass** die oxidative Thermostabilisierung bei einer Endtemperatur von 100 bis 400°C, insbesondere von 200 bis 300°C, durchgeführt wird, wobei die Thermostabilisierung vorzugsweise bis zu einer Endtemperatur von 220 bis 275°C durchgeführt wird.

21. Verwendung nach mindestens einem der Ansprüche 17 bis 20, wobei sich der Herstellung der Precursorfasern die Herstellung von Carbonfasern durch Carbonisierung der Precursorfasern anschließt, gegebenenfalls mit anschließender Graphitisierung.

## Claims

1. A method for producing a melt-spinnable lignin-based composition, **characterised in that** a reaction mixture which contains lignin and/or a lignin derivative in the form of an esterified or etherified lignin as reactive component A and a formaldehyde-releasing compound which is solid at 20°C as reactive component B in the form of 1,3,5-trioxane, paraformaldehyde and/or hexamethylene tetramine is subjected to reactive extrusion at elevated temperature, the reaction mixture being set to a complex viscosity under 1500 Pa.s, especially of 10 to 1300 Pa.s.

2. A method according to Claim 1, **characterised in that** the lignin is used in the form of a kraft lignin, soda lignin and/or organosolv lignin, preferably a deciduous lignin (hardwood lignin), a conifer lignin (softwood lignin) and/or a grass lignin.

3. A method according to one of Claims 1 or 2, **characterised in that** the lignin derivative is represented by the
formula L-O-CO-Rₓ (I),
formula L-O-R_{y} (II) and/or
formula L-O-R_{z} (III),
wherein
L-O in Formulae (I) and (II) is an esterified or etherified lignin group,
the group -CO-Rx in Formula (I) is an acyl group,
the group Rx and Ry is an aliphatic and/or aromatic group
and the group Rz in Formula (III) is a sulphonate, phosphate, phosphonate, phosphinate, phosphite, phosphonite and/or phosphinite group, in the definition of which the oxygen atom from the L-O is included.

4. A method according to at least one of Claims 1 to 3, **characterised in that** the lignin derivative has a number-average molecular weight (Mn) of 200 to 40000, especially of 300 to 20000.

5. A method according to at least one of the preceding claims, **characterised in that** the ash content of the reactive component A, measured according to DIN EN ISO 3451-4, is less than 0.1 wt.% and/or the reactive component A contains less than 1000 ppm foreign ions, especially less than 500 ppm foreign ions, especially in the form of alkali metal ions.

6. A method according to at least one of the preceding claims, **characterised in that** the reactive component A at 100 to 200°C in the melt has a complex viscosity of under 1000 Pa.s, the complex viscosity being especially between 100 and 500 Pa.s.

7. A method according to at least one of the preceding claims, **characterised in that** in the reactive component A part of the lignin and/or of the lignin derivative is replaced by an additional phenolic component as reactive component C.

8. A method according to Claim 7, **characterised in that** a non-substituted and/or monosubstituted or polysubstituted phenol and/or non-substituted and/or substituted monosubstituted or polysubstituted bisphenol is used as reactive component C, especially phenol, resorcinol, vanillin and/or bisphenol A, with the substituent of the reactive component C preferably being an alkyl group and/or alkenyl group with 1 to 10 carbon atoms and/or an alkoxy group with 1 to 10 carbon atoms, especially a methoxy, ethoxy, propoxy and/or butoxy group.

9. A method according to at least one of the preceding claims, **characterised in that** 3 to 20 parts by weight, especially 4 to 15 parts by weight, of reactive component A are used for 1 part by weight of reactive component B.

10. A method according to at least one of the preceding claims, **characterised in that** the temperature during the performance of the reactive extrusion is set to 120 to 180°C.

11. A method according to at least one of the preceding claims, **characterised in that** reaction-accelerating organic acids are admixed to the reaction mixture, especially in the form of cinnamic acid, phthalic acid, methanesulphonic acid, toluenesulphonic acid and/or benzoic acid, with the reaction mixture containing preferably 0.1 to 5 wt.%, especially 0.3 to 3 wt.%, thereof.

12. A method according to at least one of the preceding claims, **characterised in that** the reaction mixture contains a spinning additive (D) with a softener function in the form of an aromatic compound which has at least one benzene ring and, on at least one benzene ring, an OH group, a CHO group, a COOH group, a COORy group - Ry having the meaning given above - and/or an alkoxy group, the alkoxy group of the spinning additive (D) preferably having 1 to 10 carbon atoms, especially being present as a methoxy, ethoxy, 2-propoxy, n-propoxy, tert-butoxy, isobutoxy, sec-butoxy and/or n-butoxy group.

13. A method according to Claim 12, **characterised in that** the spinning additive (D) is present in the reaction mixture in an amount of less than 30 wt.%, especially of less than 15 wt.%, preferably in an amount of at least 0.5 wt.%, especially in an amount of 1 to 5 wt.%.

14. A method according to at least one of the preceding claims, **characterised in that** the reaction mixture contains an auxiliary polymer (E) with a cross-linking agent function and/or with a softener function.

15. A method according to at least one of the preceding claims, **characterised in that** the auxiliary polymer (E) is present as a saturated polyester, polyamide, polyoxymethylene, polymethyl methacrylate and/or esterified cellulose.

16. A method according to Claim 14, **characterised in that** the auxiliary polymer (E) is present in the reaction mixture in an amount of at least 10 wt.%, preferably of 15 to 50 wt.%, especially of 15 to 35 wt.%.

17. Use of the melt-spinnable lignin-based composition obtained according to the method according to one of the preceding claims for producing precursor fibres of carbon fibres by melt extrusion at elevated temperature, especially in a temperature range from 100 to 200°C, and subsequent thermostabilisation of the resulting precursor fibres, wherein the method for producing the precursor fibres is preferably carried out directly following the method for producing the melt-spinnable lignin-based composition, wherein preferably a twin-screw extruder is used for the melt extrusion.

18. Use according to Claim 17, **characterised in that** the thermostabilisation of the precursor fibres is carried out in a temperature range from 100 to 400°C, especially from 200 to 300°C, especially as oxidative thermostabilisation and/or stabilisation with high-energy radiation.

19. Use according to Claim 18, **characterised in that** ultraviolet radiation (UV), vacuum ultraviolet radiation (VUUV), electron radiation, X-ray radiation and/or gamma radiation is carried out as high-energy radiation.

20. Use according to Claim 18 or Claim 19, **characterised in that** the oxidative thermostabilisation is carried out at a final temperature of 100 to 400°C, especially of 200 to 300°C, with the thermostabilisation preferably being carried out up to a final temperature of 220 to 275°C.

21. Use according to at least one of Claims 17 to 20, wherein the production of carbon fibres by carbonisation of the precursor fibres, if applicable with subsequent graphitisation, follows on from the production of the precursor fibres.

## Revendications

1. Procédé pour la fabrication d'une composition à base de lignine, pouvant être filée à l'état fondu, **caractérisé en ce qu'**on soumet à une extrusion réactive à haute température un mélange réactionnel qui contient de la lignine et/ou un dérivé de lignine sous forme d'une lignine estérifiée ou éthérifiée en tant que composant réactif A et un composé libérant du formaldéhyde solide à 20°C en tant que composant réactif B, sous forme de 1, 3, 5-trioxanne, de paraformaldéhyde et/ou d'hexaméthylènetétramine, le mélange réactionnel étant ajusté à une viscosité complexe inférieure à 1 500 Pa.s, en particulier de 10 à 1300 Pa.s.

2. Procédé selon la revendication 1, **caractérisé en ce que** la lignine est utilisée sous forme d'une lignine obtenue par le procédé Kraft, le procédé à la soude et/ou le procédé Organosolv, de préférence une lignine de feuillu (hardwood lignin), une lignine de conifère (softwood lignin) et/ou une lignine de graminées.

3. Procédé selon l'une des revendications 1 ou 2, **caractérisé en ce que** le dérivé de lignine est représenté par
la formule L-O-CO-Rₓ (I),
la formule L-O-R_{y} (II) et/ou
la formule L-O-R_{z} (III),
dans laquelle
L-O, dans les formules (I) et (II), représente un radical lignine estérifiée ou éthérifiée,
le radical -CO-Rx, dans la formule (I), représente un radical acyle,
les radicaux Rₓ et R_{y} représentent chacun un radical aliphatique et/ou aromatique,
et le radical R_{z}, dans la formule (III), représente un radical sulfonate, phosphate, phosphonate, phosphinate, phosphite, phosphonite et/ou phosphinite, dans la définition desquels l'atome d'oxygène provient de L-O.

4. Procédé selon au moins l'une des revendications 1 à 3, **caractérisé en ce que** le dérivé de lignine présente une masse moléculaire moyenne en nombre (Mn) de 200 à 40 000, en particulier de 300 à 20 000.

5. Procédé selon au moins l'une des revendications précédentes, **caractérisé en ce que** la teneur en cendres du composant réactif A, mesurée selon DIN EN ISO 3451-4, est inférieure à 0,1 % en poids, et/ou le composant réactif A contient moins de 1 000 ppm d'ions étrangers, en particulier moins de 500 ppm d'ions étrangers, en particulier sous forme d'ions de métaux alcalins.

6. Procédé selon au moins l'une des revendications précédentes, **caractérisé en ce que** le composant réactif A présente, à 100 à 200°C dans la masse fondue, une viscosité complexe inférieure à 1 000 Pa.s, la viscosité complexe étant en particulier comprise entre 100 et 500 Pa.s.

7. Procédé selon au moins l'une des revendications précédentes, **caractérisé en ce que**, dans le composant réactif A, une partie de la lignine et/ou du dérivé de lignine est remplacée par un composant phénolique supplémentaire en tant que composant réactif C.

8. Procédé selon la revendication 7, **caractérisé en ce qu'**on utilise en tant que composant réactif C un phénol non substitué et/ou une ou plusieurs fois substitué et/ou un bisphénol non substitué et/ou substitué, une ou plusieurs fois substitué, en particulier le phénol, le résorcinol, la vanilline et/ou le bisphénol A, le substituant du composant réactif C étant de préférence un radical alkyle et/ou alcényle ayant 1 à 10 atomes de carbone et/ou un radical alkoxy ayant 1 à 10 atomes de carbone, en particulier un radical méthoxy, éthoxy, propoxy et/ou butoxy.

9. Procédé selon au moins l'une des revendications précédentes, **caractérisé en ce qu'**on utilise pour 1 partie en poids du composant réactif B 3 à 20 parties en poids, en particulier 4 à 15 parties en poids du composant réactif A.

10. Procédé selon au moins l'une des revendications précédentes, **caractérisé en ce que** la température, pendant la mise en œuvre de l'extrusion réactive, est ajustée à 120 à 180°C.

11. Procédé selon au moins l'une des revendications précédentes, **caractérisé en ce qu'**on ajoute au mélange réactionnel des acides organiques accélérateurs de réaction, en particulier sous forme d'acide cinnamique, d'acide phtalique, d'acide méthanesulfonique, d'acide toluènesulfonique et/ou d'acide benzoïque, le mélange réactionnel en contenant de préférence 0,1 à 5 % en poids, en particulier 0,3 à 3 % en poids.

12. Procédé selon au moins l'une des revendications précédentes, **caractérisé en ce que** le mélange réactionnel contient un additif de filage (D) ayant une fonction plastifiante sous forme d'un composé aromatique, qui présente au moins un cycle benzène et, sur au moins un cycle benzène, un radical OH, CHO, COOH, COOR_{y}, R_{y} ayant la signification donnée ci-dessus, et/ou alkoxy, le radical alkoxy de l'additif de filage (D) ayant de préférence 1 à 10 atomes de carbone, et se présentant de préférence sous forme d'un radical méthoxy, éthoxy, 2-propoxy, n-propoxy, tert.-butoxy, isobutoxy, sec.-butoxy et/ou n-butoxy.

13. Procédé selon la revendication 12, **caractérisé en ce que** l'additif de filage (D) est présent dans le mélange réactionnel en une quantité inférieure à 30 % en poids, en particulier inférieure à 15 % en poids, de préférence en une quantité d'au moins 0,5 % en poids, en particulier en une quantité de 1 à 5 % en poids.

14. Procédé selon au moins l'une des revendications précédentes, **caractérisé en ce que** le mélange réactionnel contient un polymère auxiliaire (E) ayant une fonction d'agent de réticulation et/ou de plastifiant.

15. Procédé selon au moins l'une des revendications précédentes, **caractérisé en ce que** le polymère auxiliaire (E) est présent sous forme d'un polyester saturé, d'un polyamide, d'un polyoxyméthylène, d'un poly(méthacrylate de méthyle) et/ou de cellulose estérifiée.

16. Procédé selon la revendication 14, **caractérisé en ce que** le polymère auxiliaire (E) est présent dans le mélange réactionnel en une quantité d'au moins 10 % en poids, de préférence de 15 à 50 % en poids, en particulier de 15 à 35 % en poids.

17. Utilisation de la composition à base de lignine, pouvant être filée à l'état fondu, obtenue selon l'une des revendications précédentes, pour la fabrication de fibres précurseurs de fibres de carbone par extrusion à l'état fondu à haute température, en particulier dans une plage de températures de 100 à 200°C, suivie d'une thermostabilisation des fibres précurseurs obtenues, le procédé de fabrication des fibres précurseurs étant de préférence mis en œuvre immédiatement après le procédé de fabrication de la composition à base de lignine pouvant être filée à l'état fondu, une extrudeuse à deux vis étant de préférence utilisée lors de l'extrusion à l'état fondu.

18. Utilisation selon la revendication 17, **caractérisée en ce que** la thermostabilisation des fibres précurseurs est mise en œuvre dans la plage de températures de 100 à 400°C, en particulier de 200 à 300°C, en particulier sous forme d'une thermostabilisation oxydative et/ou d'une stabilisation par un rayonnement de haute énergie.

19. Utilisation selon la revendication 18, **caractérisée en ce qu'**on met en œuvre en tant que rayonnement de haute énergie un rayonnement ultraviolet (UV), un rayonnement ultraviolet sous vide (VUUV), un rayonnement électronique, un rayonnement X et/ou un rayonnement gamma.

20. Utilisation selon la revendication 18 ou 19, **caractérisée en ce que** la thermostabilisation oxydative est mise en œuvre à une température finale de 100 à 400°C, en particulier de 200 à 300°C, la thermostabilisation étant mise en œuvre de préférence jusqu'à une température finale de 220 à 275°C.

21. Utilisation selon au moins l'une des revendications 17 à 20, dans laquelle la fabrication des fibres précurseurs suit la fabrication de fibres de carbone par carbonisation des fibres précurseurs, l'opération étant éventuellement suivie d'une graphitisation.
